# EUROPÄISCHE PATENTANMELDUNG

(11) **EP 4 759 576 A1**
(43) Veröffentlichungstag der Anmeldung: **17.06.2026**
(21) Anmeldenummer: 25219868.4
(22) Anmeldetag: 01.12.2025
(51) Int. Cl.: B60H 1/00

(54) **VERBESSERTE HEIZ- UND/ODER KLIMAANLAGE FÜR EIN KRAFTFAHRZEUG**

(30) Priorität: 10.12.2024 DE 102024136988
(71) Anmelder: Konvekta Aktiengesellschaft, 34613 Schwalmstadt-Ziegenhain (DE)
(72) Erfinder: Eichstetter, Carsten, 34613 Schwalmstadt (DE); Lomp, Dirk, 34630 Gilserberg (DE)
(74) Vertreter: Lindinger, Bernhard

(57) **Zusammenfassung**

Die Erfindung betrifft eine Heiz- und/oder Klimaanlage (1) mit einem Kältemittelkreislauf vorgesehen für ein Kraftfahrzeug mit einem Fahrzeugdach, die einen oder mehrere Außenwärmetauscher (5) und eine oder mehrere für das Fördern von Luft durch den/die Außenwärmetauscher (5) vorgesehene Luftfördereinrichtungen (9) umfasst, wobei zumindest der/die Außenwärmetauscher (5) und diese Luftfördereinrichtung/en (9) zum Positionieren aufdachs auf einem oder teil- oder vollintegriert in einem Fahrzeugdach eines Kraftfahrzeugs vorgesehen sind, diese Luftfördereinrichtungen (9) einen oder mehrere Radiallüfter (7) umfassen und die Anordnung bei der Heiz- und/oder Klimaanlage (1) derart ist, dass bei vorgesehener Positionierung die Drehachse/n (13) der/des Lüfterräder/Lüfterrades (11) der/des Radiallüfter/s (7) horizontal ausgerichtet sind/ist, der/die Außenwärmetauscher (5) in Luftströmungsrichtung stromaufwärts der/des Radiallüfter/s (7) derart angeordnet ist/sind, dass zumindest die Luftströmungs-Hauptrichtung für durch den/die Außenwärmetauscher (5) zu dem/die Radiallüfter (7) strömende Luft horizontal verläuft, und von der/den Luftfördereinrichtung/en (9) Luft in zumindest vertikaler Luftströmungs-Hauptrichtung nach oben aus der Heiz- und/oder Klimaanlage (1) ausblasbar ist. Ferner betrifft die Erfindung ein Kraftfahrzeug mit einer derartigen Heiz- und/oder

Klimaanlage (1).

## Beschreibung

### Gebiet der Technik:

Die Erfindung betrifft eine Heiz- und/oder Klimaanlage mit den Merkmalen des Oberbegriffs des Anspruchs 1. Eine derartige Heiz- und/oder Klimaanlage mit einem Kältemittelkreislauf wird bei einem Kraftfahrzeug mit einem Fahrzeugdach eingesetzt, wobei zumindest die ein oder mehreren Außenwärmetauscher und ein oder mehrere für das Fördern von Luft durch den/die Außenwärmetauscher vorgesehene Luftfördereinrichtungen der Heiz- und/oder Klimaanlage aufdachs auf dem oder teil- oder vollintegriert in dem Fahrzeugdach positioniert sind. Ferner betrifft die Erfindung ein Kraftfahrzeug mit einer solchen Heiz- und/oder Klimaanlage.

Kraftfahrzeuge sind Landfahrzeuge, die durch Maschinenkraft bewegt werden, ohne an Bahngleise gebunden zu sein. Dazu gehören insbesondere Omnibusse.

Bei Betrieb eines Kältemittelkreislaufs wird Kältemittel im Verdichter komprimiert, darauf dem Kältemittel im wenigstens einen als Gaskühler/Kondensator fungierenden Wärmetauscher Wärme entzogen und dann wird es in wenigstens einem Expansionsorgan entspannt, wobei es sich abkühlt. Nach durchströmen wenigstens eines als Verdampfer fungierenden Wärmetauschers gelangt schließlich verdampftes Kältemittel zum erneuten Komprimieren wieder in den Verdichter.

In einem Außenwärmetauscher erfolgt ein Wärmeaustausch mit in der Folge nach außen strömender Luft. Er ist entweder indirekt an den Kältemittelkreislauf über ein Wärmetransportmedium in einem Sekundärkreislauf oder direkt an den Kältemittelkreislauf angeschlossen.

### Stand der Technik:

Bekannt sind Heiz- und/oder Klimaanlagen mit einem Kältemittelkreislauf vorgesehen für Kraftfahrzeuge mit Fahrzeugdach, deren Luftbehandlungsbereiche aufdachs positioniert werden. In DE102019127796 A1 ist eine Aufdach-Klimatisierungseinheit offenbart, bei der aufdachs die Luftfördereinrichtung zum Fördern von Luft durch den Außenwärmetauscher in Luftströmungsrichtung stromaufwärts des Außenwärmetauscher angeordnet ist und die Drehachse des Lüfterrades vertikal verläuft. Dabei beaufschlagt die Luftfördereinrichtung einen Druckraum mit Druckluft, sodass diese nachteilig ausreichend druckfest ausgebildet sein muss. Bei der in DE102013008491 A1 offenbarten insbesondere aufdachs eines Omnibusses vorgesehenen Heiz- und Klimaanlage befindet sich die dem Außenwärmetauscher zugeordnete Luftfördereinrichtung zwar in Luftströmungsrichtung stromabwärts des Außenwärmetauschers, aber die Drehachse des Lüfterrades der als Axiallüfter ausgebildeten Lüftungseinrichtung verläuft vertikal senkrecht zur horizontalen Luftaustrittsseite des Außenwärmetauschers. Auch bei der in DE10345997 A1 offenbarten insbesondere für einen Omnibus vorgesehenen Aufdachklimaanlage sind die Drehachsen der Axiallüfter der den Außenwärmetauschern zugeordneten Luftfördereinrichtungen vertikal ausgerichtet. Es existieren zahlreiche weitere Ausführungen von Aufdachklimaanlagen für Kraftfahrzeuge, bei denen Axiallüfter mit vertikaler Drehachse für das Fördern von Luft durch ein oder mehrere Außenwärmetauscher angeordnet sind. Diese Ausführungen sind zwar relativ flach, aber haben die Nachteile, dass bei Kälte die Gefahr der Vereisung der Lüfterräder besteht, sowie bei Axiallüftern die Lautstärke, Druckinstabilität und elektrische Leistungsaufnahme im Auslegungspunkt im Vergleich zu den effizienteren Radiallüftern höher sind. Vor allem bei Kraftfahrzeugen mit ohnehin hohen Fahrzeugdachaufbauten, wie es häufig bei Omnibussen mit elektrischem Antrieb der Fall ist, überwiegen diese Nachteile.

In US6134909 A ist für ein Kraftfahrzeug eine Aufdachklimaanlage offenbart, bei der zwar die Drehachse des Lüfterrades des Axiallüfters zum Fördern von Luft durch den Außenwärmetauscher horizontal verläuft, aber dennoch die Nachteile eines Axiallüfters bestehen.

Die DE102015118557 A1 offenbart für ein Omnibusdach eine Aufdachklimaanlage mit einer Verdampfereinheit, die einen Luftströmungskanal mit Innenwärmetauscher zur Kühlung von Luft für einen Fahrzeuginnenraum aufweist.

In WO2007/042065 A1 ist für ein Kraftfahrzeug ein Klimagerät mit Radiallüfter für die Förderung von Luft durch den Kondensator gezeigt, das aber mit seinen an der Unterseite zum Zu- und Abführen der Umgebungsluft vorgesehenen Öffnungen nicht als Aufdachklimagerät vorgesehen ist.

Der im Anspruch 1 angegebenen Erfindung liegt also das Problem zugrunde, dass bisherige für ein Kraftfahrzeug vorgesehene Heiz- und/oder Klimaanlage mit einem Kältemittelkreislauf, die ein oder mehrere zum Positionieren aufdachs auf einem oder teil- oder vollintegriert in einem Fahrzeugdach vorgesehene Außenwärmetauscher und diesen zugeordnete Luftfördereinrichtungen aufweisen, insbesondere hinsichtlich Effizienz, Lautstärke, Wintertauglichkeit und Druckinstabilität unzureichend sind.

Es ist daher Aufgabe, eine verbesserte Heiz- und/oder Klimaanlage mit einem Kältemittelkreislauf vorgesehen für ein Kraftfahrzeug, die ein oder mehreren zum Positionieren aufdachs auf einem oder teil- oder vollintegriert in einem Fahrzeugdach vorgesehenen Außenwärmetauscher und diesen zugeordnete Luftfördereinrichtung/en aufweisen, bereitzustellen.

Eine entsprechende Aufgabe besteht für die Bereitstellung eines Kraftfahrzeugs mit einer derartigen Heiz- und/oder Klimaanlage.

### Zusammenfassung der Erfindung:

Das der im Anspruch 1 angegebenen Erfindung zugrundeliegende Problem wird durch die im Anspruch 1 aufgeführten Merkmale gelöst. Dadurch, dass die Heiz- und/oder Klimaanlage mit einem Kältemittelkreislauf vorgesehen für ein Kraftfahrzeug mit einem Fahrzeugdach, wie insbesondere für einen Omnibus, einen oder mehrere Außenwärmetauscher und eine oder mehrere für das Fördern von Luft durch den/die Außenwärmetauscher vorgesehene Luftfördereinrichtungen umfasst, wobei zumindest der/die Außenwärmetauscher und diese Luftfördereinrichtung/en zum Positionieren aufdachs auf einem oder teil- oder vollintegriert in einem Fahrzeugdach eines Kraftfahrzeugs vorgesehen sind, und diese ein oder mehreren Luftfördereinrichtungen einen oder mehrere Radiallüfter umfassen und die Anordnung bei der Heiz- und/oder Klimaanlage derart ist,
dass bei vorgesehener Positionierung die Drehachse/n der/des Lüfterräder/Lüfterrades der/des Radiallüfter/s horizontal ausgerichtet ist/sind, der/die Außenwärmetauscher in Luftströmungsrichtung stromaufwärts der/des Radiallüfter/s derart angeordnet ist/sind, dass zumindest die Luftströmungs-Hauptrichtung für durch den/die Außenwärmetauscher zu dem/die Radiallüfter strömende Luft horizontal verläuft, und von der/den Luftfördereinrichtung/en Luft in zumindest vertikaler Luftströmungs-Hauptrichtung nach oben aus der Heiz- und/oder Klimaanlage ausblasbar ist, wird das Problem gelöst.

Bei einer horizontal verlaufenden Luftströmungs-Hauptrichtung ist die horizontale Komponente der Luftströmungsrichtung die einzige oder zumindest größer als deren vertikale Komponente.

Bei einer vertikal verlaufenden Luftströmungs-Hauptrichtung ist die vertikale Komponente der Luftströmungsrichtung die einzige oder zumindest größer als deren horizontale Komponente.

Diese Heiz- und/oder Klimaanlage hat die Vorteile, dass die Lautstärke, Druckinstabilität und elektrischen Leistungsaufnahme im Auslegungspunkt im Vergleich zu Luftfördereinrichtungen mit Axiallüftern geringer sind und bei Kälte keine Gefahr der Vereisung der Lüfterräder besteht. Die effizienteren Radiallüfter haben mehr Leistung, wodurch die Anströmung des wenigstens einen Außenwärmetauschers verbessert ist. Ferner ist die Kondensat-Abführung bei Radiallüftern gezielter als bei Axiallüftern.

In den Unteransprüchen sind vorteilhafte Ausgestaltungen, Weiterbildungen und Verbesserungen des jeweiligen Gegenstandes der Erfindung angegeben.

Vorzugsweise ist/sind der/die Radiallüfter der Luftfördereinrichtung derart ausgebildet, dass zumindest deren Lufteinlassdüse/n und/oder die Flügel des/der Lüfterrades/Lüfterräder aus Kunststoff bestehen. Dieses spart im Vergleich zu Metall Gewicht und Kosten ein.

Bevorzugt weisen die ein oder mehreren Lüfterräder der/des Radiallüfter/s für ihre vorgesehene Drehrichtung rückwärtsgekrümmte Flügel auf. Im Vergleich zu vorwärtsgekrümmten Flügeln ist der Wirkungsgrad bei rückwärtsgekrümmten Flügeln höher.

Vorzugsweise ist bei der Heiz- und/oder Klimaanlage die Anordnung derart, dass die Strömungsrichtung für von dem wenigstens einen Außenwärmetauscher zu dem/den Radiallüfter/n strömenden Luft parallel zu der/den Drehachse/n des wenigstens einen Lüfterrades verläuft. Dadurch strömt vorteilhaft ohne Ablenkung die Luft senkrecht zur Einlassöffnung der Lufteinlassdüse in den jeweiligen Radiallüfter ein.

Von Vorteil ist eine Ausführung, bei der die ein oder mehrere Außenwärmetauscher derart angeordnet sind, dass ihre jeweilige Lufteinlassseite und Luftauslassseite senkrecht zur Drehachse des Lüfterrades des jeweiligen Radiallüfters stehen. Somit ist der wenigstens eine Außenwärmetauscher bei Betrieb stehend angeordnet, was für dessen Anströmung vorteilhaft ist und eine geringere Verschmutzung bewirkt.

Nach einer vorteilhaften Weiterbildung der Heiz- und/oder Klimaanlage sind die ein der mehreren Außenwärmetauscher zwischen Verdampferbetrieb oder Gaskühler-/Kondensatorbetrieb umschaltbar ausgebildet, wobei er/sie im Wärmepumpenbetrieb des Kältemittelkreislaufs als Verdampfer und im Klimabetrieb des Kältemittelkreislaufs als Gaskühler/Kondensator betreibbar ist/sind. Eine derart umschaltbare Heiz- und/oder Klimaanlage ist je nach Schaltung des Kältemittelkreislaufs zum Heizen oder zum Kühlen von Luft für einen Fahrzeuginnenraum betreibbar.

Ein als Gaskühler/Kondensator betreibbarer Außenwärmetauscher kann als ein Kondensator für im Hochdruckbereich des Kältemittelkreislaufs unterkritisch zu betreibendes Kältemittel betreibbar ausgebildet oder als ein Gaskühler für im Hochdruckbereich des Kältemittelkreislaufs überkritisch zu betreibendes Kältemittel betreibbar ausgebildet sein oder er kann derart ausgebildet sein, dass er sowohl als Gaskühler als auch als Kondensator einsetzbar ist.

Gemäß einer vorteilhaften Ausführung ist zumindest ein Teil der Oberseite des Gehäuses der Heiz- und/oder Klimaanlage als Bereich der Oberseite eines Fahrzeugdachs vorgesehen und das Gehäuse weist direkt vor der Lufteinlassseite des wenigstens einen Außenwärmetauschers ein oder mehrere seitliche Lufteinlassöffnungen für anzusaugende Luft und oben ein oder mehrere Luftausblasöffnungen für Luft direkt aus dem/den Radiallüfter/n auf. Dadurch kann effizient ohne Umlenkung von außen angesaugte Luft von der wenigstens einen seitlichen Lufteinlassöffnung zum wenigstens einen Außenwärmetauscher gelangen und schließlich von dem wenigsten einen Radiallüfter direkt nach oben aus der Heiz- und/oder Klimaanlage ausgeblasen werden. Die Luftleitung ist besonders effizient, wenn die Heiz- und/oder Klimaanlage einen an seinen Seitenwänden luftundurchlässigen Luftkanalabschnitt zur horizontalen Luftführung von der Luftauslassseite des wenigstens einen Außenwärmetauschers zur Lufteinlassdüse des wenigstens einen Radiallüfters umfasst, wobei die wenigstens eine Drehachse des wenigstens einen Lüfterrades mittig zu der vertikalen Höhe (H) des Luftkanalabschnitts verläuft.

Bevorzugt sind bei vorgesehener Positionierung der Luftfördereinrichtung/en deren Radiallüfter derart angeordnet, dass deren Lüfterräder in einer horizontalen Reihe mit horizontal quer zur Längsachse des Kraftfahrzeugs zueinander parallel ausgerichteten Drehachsen angeordnet sind, wodurch für die Anzahl der Radiallüfter der Luftfördereinrichtung die Länge des Fahrzeugdachs ausgenutzt werden kann.

Gemäß einer vorteilhaften Ausführung der Heiz- und/oder Klimaanlage sind der/die Außenwärmetauscher und die für das Fördern von Luft durch den/die Außenwärmetauscher vorgesehene Luftfördereinrichtungen in einem ersten Teilbereich der Heiz- und/oder Klimaanlage angeordnet und ist nach vorgesehenem Einbau auf oder teilintegriert in einem Fahrzeugdach der erste Teilbereich zwischen rechts und links zu ihm parallel zur Längsachse des Kraftfahrzeugs angeordneten zweiten und dritten Teilbereich der Heiz- und/oder Klimaanlage positioniert, wobei der zweite und dritte Teilbereich jeweils ein oder mehrere Innenwärmetauscher und ein oder mehrere weitere Luftfördereinrichtungen umfassen und die weiteren Luftfördereinrichtungen für das Fördern von Luft durch die Innenwärmetauscher und weiter in einen Kraftfahrzeuginnenraum vorgesehen sind, und der den ersten Teilbereich abdeckende Gehäuseteil ein oder mehrere seitliche Lufteinlassöffnungen aufweist und zumindest dort über den benachbarten den zweiten oder dritten Teilbereich abdeckenden Gehäuseteil hinausragt. Eine derartige Heiz- und/oder Klimaanlage ist insbesondere in einer großen Ausführung beispielsweise für einen Omnibus besonders gut geeignet. Der höhere erste Teilbereich verläuft aufdachs mittig längs des Fahrzeugdachs, wobei die seitlichen Lufteinlassöffnungen für anzusaugende Luft von außen nicht verdeckt sind.

Die Aufgabe hinsichtlich der Bereitstellung eines Kraftfahrzeugs wird durch ein Kraftfahrzeug mit einem Fahrzeugdach und einer erfindungsgemäßen Heiz- und/oder Klimaanlage, wobei zumindest deren Außenwärmetauscher und deren für das Fördern von Luft durch den/die Außenwärmetauscher vorgesehene Luftfördereinrichtung/en aufdachs auf dem oder teil- oder vollintegriert in dem Fahrzeugdach positioniert sind, gelöst.

Hinsichtlich der Vorteile sowie vorteilhaften Ausführungen und Weiterbildungen gelten entsprechend die diesbezüglichen obigen Angaben zu der erfindungsgemäßen Heiz- und/oder Klimaanlage. Insbesondere ist ein Omnibus als ein erfindungsgemäßes Kraftfahrzeug von Vorteil. Bei einem Omnibus sind derartig effiziente, geräuscharme und wintertaugliche Aufdachanlagen vor allem dann, wenn sowieso höhere Dachaufbauten vorhanden sind, vorteilhaft.

### Kurze Beschreibung der Zeichnungen:

Anhand der Zeichnungen werden Ausführungsbeispiele der Erfindung erläutert.

Es zeigen
Fig. 1 in schematischer Darstellung im vertikalen Querschnitt der mit Außenwärmetauscher versehene Luftführungsbereich eines Ausführungsbeispiels einer erfindungsgemäßen Heiz- und/oder Klimaanlage;
Fig. 2 in schematischer Darstellung im vertikalen Längsschnitt im Bereich der Radiallüfter ein weiteres Ausführungsbeispiel einer erfindungsgemäßen Heiz- und/oder Klimaanlage;
Fig. 3 in schematischer Darstellung ohne Gehäuseabdeckung ein weiteres Ausführungsbeispiel einer erfindungsgemäßen Heiz- und/oder Klimaanlage; und
Fig. 4 in schematischer Darstellung das in Fig. 3 gezeigte Ausführungsbeispiel einer erfindungsgemäßen Heiz- und/oder Klimaanlage mit Gehäuseabdeckung auf einem Fahrzeugdach eines Kraftfahrzeugs.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

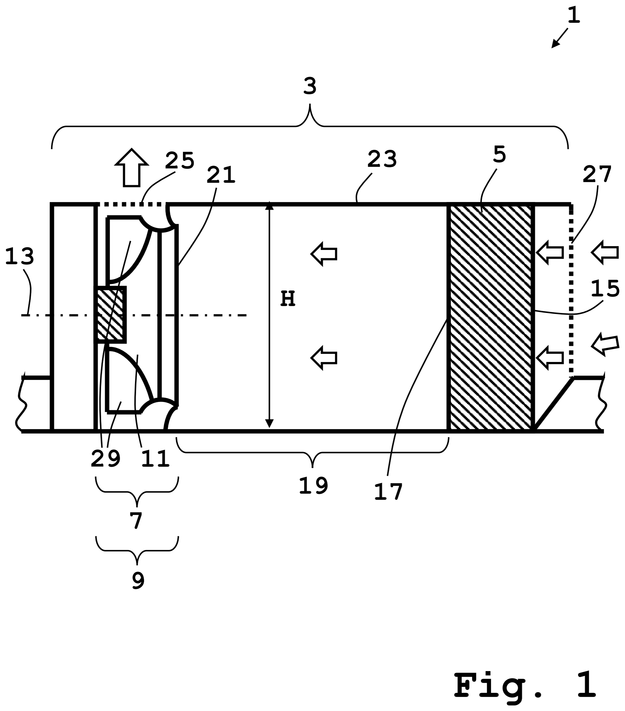

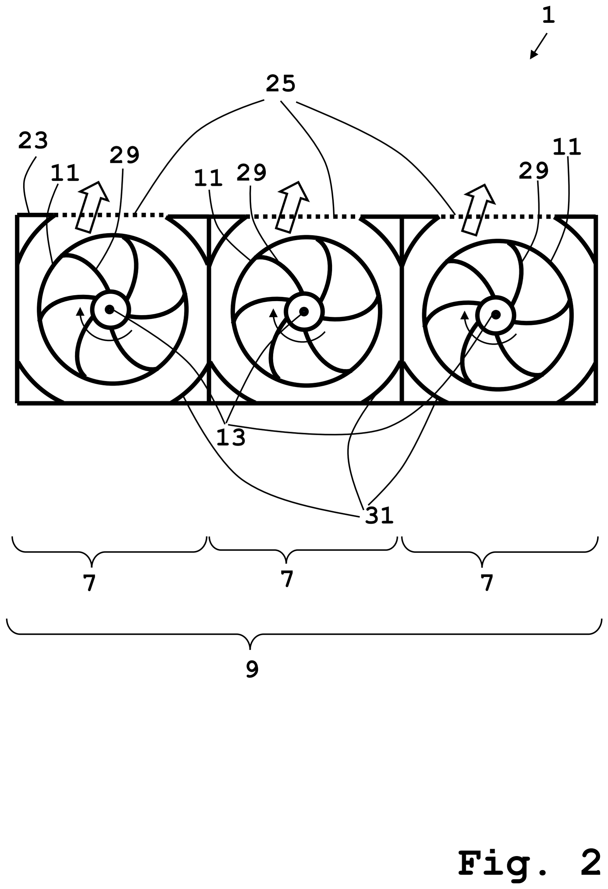

Luftströmungsrichtungen sind in den Figuren 1 und 2 mit Pfeilen verdeutlicht.

In Fig. 1 ist schematisch im vertikalen Querschnitt der mit Außenwärmetauscher 5 versehene Luftführungsbereich 3 eines Ausführungsbeispiels einer erfindungsgemäßen Heiz- und/oder Klimaanlage 1 dargestellt. Die Heiz- und/oder Klimaanlage 1 ist für ein Kraftfahrzeug mit einem Fahrzeugdach, wie beispielsweise einen Omnibus, vorgesehen. Der Außenwärmetauscher 5 befindet sich in einem Gehäuse 23 der Heiz- und/oder Klimaanlage 1. Er ist als Luft-Kältemittel-Wärmetauscher ausgebildet und an einen Kältemittelkreislauf angeschlossen. Der Außenwärmetauscher 5 hat eine quaderartige Form. Er ist in Luftströmungsrichtung stromaufwärts des Radiallüfters 7 der Luftfördereinrichtung 9 angeordnet. Diese dient zum Fördern von Luft durch den Außenwärmetauscher 5. Der Luftführungsbereich 3 mit Außenwärmetauscher 5 und Luftfördereinrichtung 9 ist zum Positionieren auf einem oder teilintegriert in einem Fahrzeugdach eines Kraftfahrzeugs vorgesehen.

Bei dieser vorgesehenen Positionierung hat das Lüfterrad 11 des Radiallüfters 7 eine horizontal ausgerichtete Drehachse 13. Die horizontal verlaufenden Drehachse 13 steht senkrecht zur Lufteinlassseite 15 und Luftauslassseite 17 des Außenwärmetauschers 5, sodass die Strömungsrichtung der Luft vom Außenwärmetauscher 5 zum Radiallüfter 7 parallel zur Drehachse 13 ausgerichtet ist. Folglich verläuft die Luftströmungs-Hauptrichtung für durch den Außenwärmetauscher 5 zum Radiallüfter 7 strömende Luft horizontal. Der an seinen Seitenwänden luftundurchlässige Luftkanalabschnitt 19 dient der horizontalen Luftführung von der Luftauslassseite 17 des Außenwärmetauschers 5 zur Lufteinlassdüse 21 des Radiallüfters 7, wobei die Drehachse 13 des Lüfterrades 11 mittig zu der vertikalen Höhe H des Luftkanalabschnitts 19 verläuft. Denkbar ist auch eine Ausführung der Heiz- und/oder Klimaanlage 1, bei der die Drehachse 13 des Lüfterrades 11 exzentrisch zu der vertikalen Höhe des Luftkanalabschnitts 19 liegt.

Bei Betrieb wird im Radiallüfter 7 der Luftfördereinrichtung 9 durch die Lufteinlassdüse 21 angesaugte Luft nach oben in vertikaler Luftströmungs-Hauptrichtung aus der Heiz- und/oder Klimaanlage 1 ausgeblasen. Dafür weist das Gehäuse 23 oben direkt über dem Radiallüfter 7 eine Luftausblasöffnung 25 auf. In Luftströmungsrichtung stromaufwärts vor der Lufteinlassseite 15 des Außenwärmetauschers 5 verfügt das Gehäuse 3 über eine seitliche Lufteinlassöffnung 27. Durch sie wird Luft bei Betrieb von außen angesaugt und nach dem Durchströmen des Luftführungsbereichs 3 wieder nach außen durch die Luftausblasöffnung 25 ausgeblasen. Die Flügel 29 des Lüfterrades 11 des Radiallüfters 7 sind in diesem Fall für ihre vorgesehene Drehrichtung rückwärtsgekrümmt und bestehen wie die Lufteinlassdüse 21 aus hartem Kunststoff. Denkbar ist auch eine Ausführung des Radiallüfters 7, bei der die Flügel 29 des Lüfterrades 11 in vorgesehener Drehrichtung vorwärtsgekrümmt sind. Ferner sind Ausführungen denkbar, bei denen das Material von Flügeln 29 und/oder Lufteinlassdüse 21 des Radiallüfters 7 ein Metall ist. Der Außenwärmetauscher 5 ist zwischen Verdampferbetrieb oder Gaskühler-/Kondensatorbetrieb umschaltbar ausgebildet. Er wird im Wärmepumpenbetrieb des Kältemittelkreislaufs als Verdampfer und im Klimabetrieb des Kältemittelkreislaufs als Gaskühler/Kondensator eingesetzt. Denkbar sind auch andere Ausführungen eines Außenwärmetauschers 5, wie beispielsweise ein Luft-Flüssigkeits-Wärmetauscher, bei dem die Flüssigkeit ein Wärmetransportmedium eines an den Kältemittelkreislauf über einen weiteren Wärmetauscher angeschlossenen Sekundärkreises ist.

In Fig. 2 ist schematisch im vertikalen Längsschnitt im Bereich der Radiallüfter 7 ein weiteres Ausführungsbeispiel einer erfindungsgemäßen Heiz- und/oder Klimaanlage 1 dargestellt. Sie hat eine Kältemittelkreislauf und ist für ein Kraftfahrzeug mit Fahrzeugdach, wie beispielsweise einem Omnibusdach, vorgesehen. Es sind in diesem Fall ohne darauf beschränkt zu sein drei Radiallüfter 7. Die Lüfterräder 11 der Radiallüfter 7 der Luftfördereinrichtung 9 sind bei vorgesehener Positionierung aufdachs auf einem oder teil- oder vollintegriert in einem Fahrzeugdach in einer horizontalen Reihe mit horizontal quer zur Längsachse des Kraftfahrzeugs zueinander parallel ausgerichteten Drehachsen 13 angeordnet. Die Flügel 29 der drei Lüfterräder 11 sind in Drehrichtung rückwärtsgekrümmt und bestehen wie die Lufteinlassdüsen aus Kunststoff. Bei Betrieb strömt von außen durch Lufteinlassöffnungen kommende Luft durch die ebenso wie die Luftfördereinrichtung 9 für die Aufdachmontage vorgesehenen Außenwärmetauscher horizontal zu den drei Radiallüftern 7, also bei Fig. 2 aus Blickrichtung kommend. Dabei wird die quer zur Längsachse des Kraftfahrzeugs mit horizontaler Luftströmungs-Hauptrichtung angesaugte Luft dann im jeweiligen Radiallüfter 7 umgelenkt und mit vertikaler Luftströmungs-Hauptrichtung nach oben durch die drei Luftausblasöffnungen 25 der zum Gehäuses 23 gehörenden Abdeckung aus der Heiz- und/oder Klimaanalage 1 ausgeblasen. Die Radiallüftergehäuse 31 der Radiallüfter 7 verfügen über eine luftundurchlässige Trennwand zu dem jeweils benachbarten Radiallüfter 7. Denkbar ist auch eine Variante mit einem gemeinsamen Radiallüftergehäuse 31 ohne Trennwand zwischen den einzelnen Radiallüftern 7. Die jeweilige Luftausblasöffnung 25 befindet sich über dem jeweiligen Lüfterrad 11 und damit direkt über dem jeweiligen Radiallüfter 7.

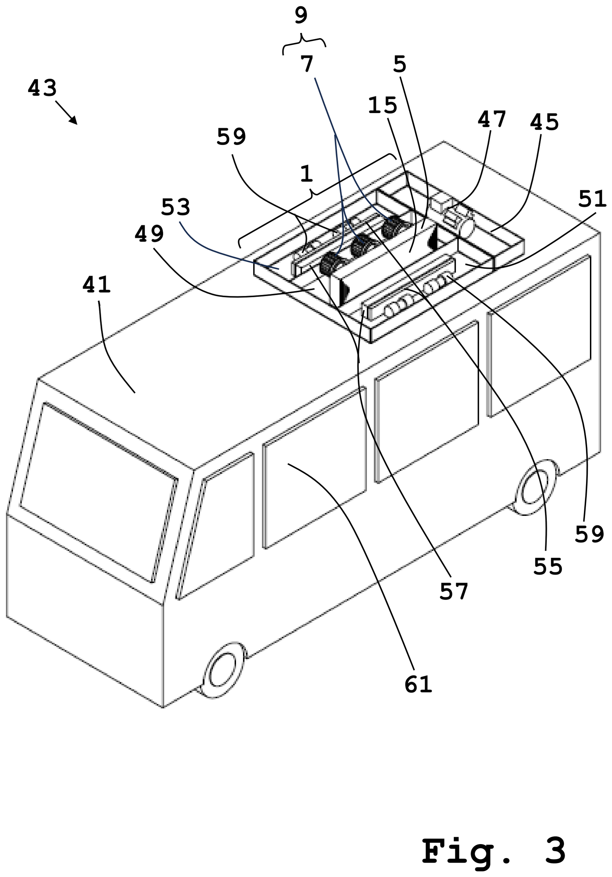

In Fig. 3 ist schematisch ohne Gehäuseabdeckung ein weiteres Ausführungsbeispiel einer erfindungsgemäßen Heiz- und/oder Klimaanlage 1 gezeigt. Sie befindet sich aufdachs teilintegriert in einem Fahrzeugdach 41 eines als Omnibus ausgebildeten Kraftfahrzeugs 43. Sie verfügt über vier Teilbereiche, wobei der quer zur Längsachse des Kraftfahrzeugs 43 im hinteren Bereich liegende vierte Teilbereich 45 den Verdichter 47 des Kältemittelkreislaufs enthält. Die drei davor angeordneten Teilbereiche 49, 51 und 53 sind parallel zur Längsachse des Kraftfahrzeugs 43 ausgerichtet, wobei der erste Teilbereich 49 mittig zwischen den seitlich dazu liegenden zweiten und dritten Teilbereichen 51, 53 angeordnet ist. Der erste Teilbereich 49 weist den Außenwärmetauscher 5 und die für das Fördern von Luft durch den Außenwärmetauscher 5 vorgesehenen Luftfördereinrichtungen 9 mit, ohne auf die Anzahl beschränkt zu sein, drei Radiallüftern 7 auf. Die Lüfterräder der Radiallüfter 7 sind in einer horizontalen Reihe mit horizontal quer zur Längsachse des Kraftfahrzeugs 43 parallel ausgerichteten Drehachsen angeordnet. Die Flügel der drei Lüfterräder sind in Drehrichtung rückwärtsgekrümmt und bestehen wie die Lufteinlassdüsen aus Kunststoff. Denkbar sind auch Ausführungen, bei denen die Flügel und/oder Lufteinlassdüsen der Radiallüfter 7 aus Metall bestehen. Die Lufteinlassseite 15 und Luftauslassseite des Außenwärmetauschers 5 stehen senkrecht zu der Drehachse des Lüfterrades des jeweiligen Radiallüfters 7. Die Außenwärmetauscher 5 sind auf ihrer schmalen Unterseite stehend in einer horizontalen Reihe parallel zur Längsachse des Kraftfahrzeugs 43 angeordnet. Sie befinden sich in Luftströmungsrichtung für von außen angesaugte Luft stromaufwärts der Radiallüfter 7. Die Luftströmungs-Hauptrichtung für durch den Außenwärmetauscher 5 zu den Radiallüftern 7 strömende Luft verläuft horizontal. Bei Betrieb hat der Luftstrom von dem Außenwärmetauscher 5 zu den Radiallüftern 7 eine Strömungsrichtung parallel zu den Drehachsen der Lüfterräder. Mit den drei Radiallüftern 7 der Luftfördereinrichtung 9 ist von diesen angesaugte Luft in zumindest vertikaler Luftströmungs-Hauptrichtung nach oben aus der Heiz- und/oder Klimaanlage 1 ausblasbar. Der Außenwärmetauscher 5 ist in diesem Fall zwischen Verdampferbetrieb oder Gaskühler-/Kondensatorbetrieb umschaltbar ausgebildet, wobei sie im Wärmepumpenbetrieb des Kältemittelkreislaufs als Verdampfer und im Klimabetrieb des Kältemittelkreislaufs als Gaskühler/Kondensator einsetzbar sind.

Im zweiten Teilbereich 51 und dritten Teilbereich 53 befinden sich jeweils, ohne auf die Anzahl beschränkt zu sein, eine Heizbatterie 55, ein Innenwärmetauscher 57 und jeweils eine weitere Luftfördereinrichtung 59 zum Fördern von Luft durch die Innenwärmetauscher 57 und weiter in den Kraftfahrzeuginnenraum 61. Dafür verfügen die beiden weiteren Luftfördereinrichtungen 59 über mehrere Doppelradialgebläse, die Luft durch den jeweiligen Innenwärmetauscher 57 saugen und in zum Kraftfahrzeuginnenraum 61 führende Luftleitungen einblasen.

Der erste Teilbereich 49 ragt einschließlich seiner Außenwärmetauscher 5 und Luftfördereinrichtung 9 über die benachbarten zweiten und dritten Teilbereiche 51, 53 der Heiz- und/oder Klimaanlage 1 hinaus.

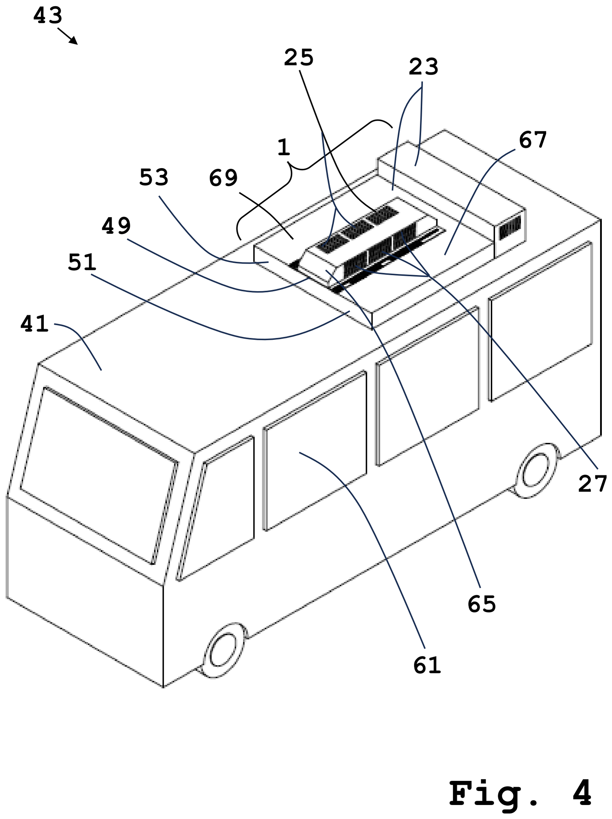

In Fig. 4 ist schematisch das in Fig. 3 gezeigte Ausführungsbeispiel einer erfindungsgemäßen Heiz- und/oder Klimaanlage 1 mit zum Gehäuse 23 gehörender Abdeckung, deren Oberseite einen Bereich der Oberseite des Fahrzeugdachs 41 bildet, dargestellt. Die Heiz- und/oder Klimaanlage 1 ist wie in Fig. 3 aufdachs teilintegriert im Fahrzeugdach 41 des als Omnibus ausgebildeten Kraftfahrzeugs 43 positioniert und dient zum Heizen oder Kühlen von Luft für den Kraftfahrzeuginnraum 61. Der den ersten Teilbereich 49 abdeckende Gehäuseteil 65 weist oben direkt über den Radiallüftern Luftausblasöffnungen 25 mit Gitterrosten auf. Durch diese Luftausblasöffnungen 25 kann Luft direkt aus den Radiallüftern nach oben mit vertikaler Luftströmungs-Hauptrichtung aus der Heiz- und/oder Klimaanlage 1 ausgeblasen werden. Ferner verfügt der den ersten Teilbereich 49 abdeckende Gehäuseteil 65 an seiner einen Längsseite über Lufteinlassöffnungen 27 mit Gitterrost. Diese Lufteinlassöffnungen 27 für anzusaugende Luft von außen befinden sich direkt vor den Lufteinlassseiten der Außenwärmetauscher. Der den ersten Teilbereich 49 abdeckende Gehäuseteil 65 ragt sowohl über den benachbarten den zweiten Teilbereich 51 abdeckenden Gehäuseteil 67 als auch über den auf der anderen Längsseite benachbarten den dritten Teilbereich 53 abdeckenden Gehäuseteil 69 hinaus. Dabei überragt der den ersten Teilbereich 49 abdeckende Gehäuseteil 65 den auf Seiten der Lufteinlassöffnung 27 benachbarten den zweiten Teilbereich 51 abdeckenden Gehäuseteil 67 so weit, dass die Lufteinlassöffnungen 27 vollständig freiliegen und nicht durch den benachbarten Gehäuseteil 67 für Luft von außen verdeckt werden.

## Patentansprüche

1. Heiz- und/oder Klimaanlage (1) mit einem Kältemittelkreislauf vorgesehen für ein Kraftfahrzeug (43) mit einem Fahrzeugdach (41), wie insbesondere für einen Omnibus, die einen oder mehrere Außenwärmetauscher (5) und eine oder mehrere für das Fördern von Luft durch den/die Außenwärmetauscher (5) vorgesehene Luftfördereinrichtungen (9) umfasst, wobei zumindest der/die Außenwärmetauscher (5) und diese Luftfördereinrichtung/en (9) zum Positionieren aufdachs auf einem oder teil- oder vollintegriert in einem Fahrzeugdach (41) eines Kraftfahrzeugs (43) vorgesehen sind, **dadurch gekennzeichnet,**
**dass** diese ein oder mehreren Luftfördereinrichtungen (9) einen oder mehrere Radiallüfter (7) umfassen und die Anordnung bei der Heiz- und/oder Klimaanlage (1) derart ist,
**dass** bei vorgesehener Positionierung
- die Drehachse/n (13) der/des Lüfterräder/Lüfterrades (11) der/des Radiallüfter/s (7) horizontal ausgerichtet ist/sind,
- der/die Außenwärmetauscher (5) in Luftströmungsrichtung stromaufwärts der/des Radiallüfter/s (7) derart angeordnet ist/sind, dass zumindest die Luftströmungs-Hauptrichtung für durch den/die Außenwärmetauscher (5) zu dem/die Radiallüfter (7) strömende Luft horizontal verläuft, und
- von der/den Luftfördereinrichtung/en (9) Luft in zumindest vertikaler Luftströmungs-Hauptrichtung nach oben aus der Heiz- und/oder Klimaanlage (1) ausblasbar ist.

2. Heiz- und/oder Klimaanlage (1) nach Anspruch 1 **dadurch gekennzeichnet, dass** der/die Radiallüfter (7) der Luftfördereinrichtung (9) derart ausgebildet ist/sind, dass zumindest deren Lufteinlassdüse/n (21) und/oder die Flügel (29) des/der Lüfterrades/Lüfterräder (11) aus Kunststoff bestehen.

3. Heiz- und/oder Klimaanlage (1) nach Anspruch 1 oder 2 **dadurch gekennzeichnet, dass** die ein oder mehreren Lüfterräder (11) der/des Radiallüfter/s (7) für ihre vorgesehene Drehrichtung rückwärtsgekrümmte Flügel (29) aufweisen.

4. Heiz- und/oder Klimaanlage (1) nach einem der Ansprüche 1 bis 3 **dadurch gekennzeichnet, dass** die Anordnung derart ist, dass die Strömungsrichtung für von dem wenigstens einen Außenwärmetauscher (5) zu dem/die Radiallüfter (7) strömende Luft parallel zu der/den Drehachse/n (13) des wenigstens einen Lüfterrades (11) verläuft.

5. Heiz- und/oder Klimaanlage (1) nach einem der Ansprüche 1 bis 4 **dadurch gekennzeichnet, dass** die ein oder mehrere Außenwärmetauscher (5) derart angeordnet sind, dass ihre jeweilige Lufteinlassseite (15) und Luftauslassseite (17) senkrecht zur Drehachse (13) des Lüfterrades (11) des jeweiligen Radiallüfters (7) stehen.

6. Heiz- und/oder Klimaanlage (1) nach einem der Ansprüche 1 bis 5 **dadurch gekennzeichnet, dass** die ein der mehreren Außenwärmetauscher (5) zwischen Verdampferbetrieb oder Gaskühler-/Kondensatorbetrieb umschaltbar ausgebildet sind, wobei er/sie im Wärmepumpenbetrieb des Kältemittelkreislaufs als Verdampfer und im Klimabetrieb des Kältemittelkreislaufs als Gaskühler/Kondensator betreibbar ist/sind.

7. Heiz- und/oder Klimaanlage (1) nach einem der Ansprüche 1 bis 6 **dadurch gekennzeichnet, dass** zumindest ein Teil der Oberseite ihres Gehäuses (23) als Bereich der Oberseite eines Fahrzeugdachs (41) vorgesehen ist und das Gehäuse (23) direkt vor der Lufteinlassseite (15) des wenigstens einen Außenwärmetauschers (5) ein oder mehrere seitliche Lufteinlassöffnungen (27) für anzusaugende Luft und oben ein oder mehrere Luftausblasöffnungen (25) für Luft direkt aus dem/den Radiallüfter/n (7) aufweist.

8. Heiz- und/oder Klimaanlage (1) nach einem der Ansprüche 1 bis 7 **dadurch gekennzeichnet, dass** sie einen an seinen Seitenwänden luftundurchlässigen Luftkanalabschnitt (19) zur horizontalen Luftführung von der Luftauslassseite (17) des wenigstens einen Außenwärmetauschers (5) zur Lufteinlassdüse (21) des wenigstens einen Radiallüfters (7) umfasst, wobei die wenigstens eine Drehachse (13) des wenigstens einen Lüfterrades (11) mittig zu der vertikalen Höhe (H) des Luftkanalabschnitts (19) verläuft.

9. Heiz- und/oder Klimaanlage (1) nach einem der Ansprüche 1 bis 8 **dadurch gekennzeichnet, dass** bei vorgesehener Positionierung der Luftfördereinrichtung/en (9) deren Radiallüfter (7) derart angeordnet sind, dass deren Lüfterräder (11) in einer horizontalen Reihe mit horizontal quer zur Längsachse des Kraftfahrzeugs (43) zueinander parallel ausgerichteten Drehachsen (13) angeordnet sind.

10. Heiz- und/oder Klimaanlage (1) nach einem der Ansprüche 1 bis 9 **dadurch gekennzeichnet, dass** der/die Außenwärmetauscher (5) und die für das Fördern von Luft durch den/die Außenwärmetauscher (5) vorgesehenen Luftfördereinrichtungen (9) in einem ersten Teilbereich (49) der Heiz- und/oder Klimaanlage (1) angeordnet sind und nach vorgesehenem Einbau auf oder teilintegriert in einem Fahrzeugdach (41) der erste Teilbereich (49) zwischen rechts und links zu ihm parallel zur Längsachse des Kraftfahrzeugs (43) angeordneten zweiten Teilbereich (51) und dritten Teilbereich (53) der Heiz- und/oder Klimaanlage (1) positioniert ist, wobei der zweite und dritte Teilbereich (51, 53) jeweils ein oder mehrere Innenwärmetauscher (57) und ein oder mehrere weitere Luftfördereinrichtungen (59) umfassen und die weiteren Luftfördereinrichtungen (59) für das Fördern von Luft durch die Innenwärmetauscher (57) und weiter in einen Kraftfahrzeuginnenraum (61) vorgesehen sind, und der den ersten Teilbereich (49) abdeckende Gehäuseteil (65) ein oder mehrere seitliche Lufteinlassöffnungen (27) aufweist und zumindest dort über den benachbarten den zweiten oder dritten Teilbereich (51, 53) abdeckenden Gehäuseteil (67, 69) hinausragt.

11. Kraftfahrzeug (43) mit einem Fahrzeugdach (41) und einer Heiz- und/oder Klimaanlage (1) nach einem der Ansprüche 1 bis 10 **dadurch gekennzeichnet, dass** zumindest deren Außenwärmetauscher (5) und deren für das Fördern von Luft durch den/die Außenwärmetauscher (5) vorgesehene Luftfördereinrichtung/en (9) aufdachs auf dem oder teil- oder vollintegriert in dem Fahrzeugdach (41) positioniert sind.

12. Kraftfahrzeug (43) nach Anspruch 11 **dadurch gekennzeichnet, dass** es ein Omnibus ist.
